# EUROPÄISCHE PATENTSCHRIFT

(11) **EP 1 757 741 B1**
(45) Veröffentlichungstag und Bekanntmachung des Hinweises auf die Patenterteilung: **02.01.2013**
(21) Anmeldenummer: 06015869.8
(22) Anmeldetag: 31.07.2006
(51) Int. Cl.: E03C 1/04, F16K 27/00

(54) **Armatur mit einem Wasserauslauf in Form einer offenen Rinne**
Water tap with open channel spout
Robinetterie avec un bec en forme de conduite ouverte

(30) Priorität: 25.08.2005 DE 102005040158
(43) Veröffentlichungstag der Anmeldung: 28.02.2007
(73) Patentinhaber: HANSA METALLWERKE AG, 70567 Stuttgart (DE)
(72) Erfinder: Harsch, Martin, 74395 Mundelsheim (DE)
(74) Vertreter: Ostertag, Ulrich

(56) Entgegenhaltungen:
- WO-A-01/63157
- DE-A1- 3 031 371
- DE-A1- 4 305 858
- DE-U1- 8 800 295

## Beschreibung

Die Erfindung betrifft eine sanitäre Auslaufarmatur, insbesondere einen Einhebelmischer, nach dem Oberbegriff des Anspruches 1.

In jüngster Zeit wächst der wunsch, bei der Gestaltung von Sanitärarmaturen neue Akzente zu setzen. Insbesondere werden auch sanitäre Auslaufarmaturen gewürtscht, bei denen sich der Auslauf im oberen oder gar obersten Bereich befindet und das Wasser über eine Art Auslaufrinne im Wesentlichen drucklos, ähnlich einem kleinen natürlichen Bach, abströmt. Um den Endruck der Natürlichkeit hervorzurufen, ist es erforderlich, dass die Wasserströmung in der Auslaufrinne weitestgehend turbulenzfrei erfolgt. Dies zu erreichen, ist jedoch nicht einfach, da der Wasserweg durch die Sanitärarmatur hindurch mit vielen Umlenkungen verbunden ist.

zum Teil rühren die Schwierigkeiten daher, dass die weit verbreiteten Steuerkartuschen im Allgemeinen alle Anschlussöffnungen an der Unterseite ihres Bodens besitzen, was die dichte Verbindung der Steuerkartusche mit dem Armaturengehäuse erleichtert. Dieses Konstruktionsprinzip der Steuerkartusche ist eigentlich für Sanitärarmaturen gedacht, bei denen der Auslauf verhältnismäßig tief an das Armaturengehäuse angesetzt ist. Gleichwohl ist es wünschenswert, auch bei Sanitärarmaturen der eingangs genannten Art diese bekannten Steuerkartuschen einzusetzen.

Auf dem Hintergrund dieser Problematik sind die bekannten sanitären Auslaufarmaturen der eingangs genannten Art zu verstehen, wie sie insbesondere aus der DE 102 61 266 B3 bekannt sind. Bei diesen erfolgt eine Vergleichmäßigung und Beruhigung des Wasserstroms an zwei Stellen: Zum einen in dem ringförmigen Durchströmungsraum zwischen der Mantelfläche des Aufnahmeeinsatzes und der Mantelfläche des Aufnahmeraumes, in den dort ein einzelne Durchströmungsausnehmungen aufweisender Distanzring eingesetzt wird. Zum anderen wird eine vergleichmäßigung des Wasserstromes unmittelbar am Austritt des Wassers in den dort schalenförmig ausgestalteten Auslauf angestrebt, indem an dem Einlass in den Auslauf eine sich gegen den Wasserdruck abhebende elastische Membran eingesetzt wird.

In der WO 01 631 57 A ist ebenfalls eine sanitäre Auslaufarmatur beschrieben, die etwa der eingangs beschriebenen Art entspricht und die Merkmale des Oberbegriffs von Anspruch 1 aufweist.

Die DE 30 31 378 A1 betrifft ein geräuscharmes Mengenregulierventil. In einem Halteteil, welches eine verdrehbare Ventilscheibe führt, sind strahlenförmig schottartige Rippen ausgebildet. Diese haben den Sinn, das Mengenregulierventil geräuscharm zu machen. Der Gedanke dabei ist, den gesamten Wasserstrom in eine Vielzahl von einzelnen Wasserströmen aufzuteilen und auf diese Weise Geräusche erzeugende Turbulenzen zu vermeiden.

Die DE 88 00 295 U1 befasst sich mit Geräuschdämpfern für Wasserhähne, die keramische Steuerscheiben aufweisen. Ein geräuschdämpfender Einsatz besitzt eine Vielzahl von Rippen, dort "Zähne" genannt. Dieser Einsatz ist in die Wasserdurchtrittsöffnung einer beweglichen Steuerscheibe eingesetzt. Erneut ist Sinn der Maßnahme, den gesamten Wasserstrom auf eine Vielzahl von "Einzelpfaden" aufzuteilen.

Aufgabe der vorliegenden Erfindung ist es, eine Sanitärarmatur der eingangs genannten Art so auszugestalten, dass mit einfachen Mitteln ein natürlicher, möglichst beruhigte Wasserstrom durch die Auslaufrinne des Auslaufes erzielbar ist.

Diese Aufgabe wird mit den Merkmalen des Anspruches 1 gelöst.

Erfindungsgemäß wurde erkannt, dass mit der Beruhigung der Wasserströmung bereits in verhältnismäßig großer Entfernung von der eigentlichen Auslaufrinne begonnen werden muss und dass hierzu insbesondere die Strömung in dem ersten Durchströmungsraum zu vergleichmäßigen ist. Diese Vergleichmäßigung erfolgt durch vorsprünge an dem Bodenteil des Aufnahmeeinsatzes, die so dimensioniert und angeordnet sind, dass bei dem gewünschten Wasserdurchsatz ein optimaler Vergleichmäßigungseffekt erzielt wird. Der erfindungsgemäße, einstückig angeformte Flansch ersetzt dabei den Distanzring, der, wie oben erwähnt, beim Gegenstand der DE 102 61 266 B3 einen Teil der wasserberuhigenden Wirkung ausübt.

Die Vorsprünge können mit ihrer unteren Stirnseite auf dem Boden des Aufnahmeraumes aufstehen. Sie dienen auf diese Weise als "Distanzelemente", welche den erforderlichen ersten Durchströmungsraum zwischen dem Bodenteil des Aufnahmeeinsatzes und dem Boden des Aufnahmeraumes freihalten.

Zweckmäßigerweise sind die Vorsprünge als Segmente ausgestaltet, zwischen denen jeweils ein von Wasser durchströmter Spalt verbleibt und die auf mindestens einer geschlossenen Kurve liegen. Das Wasser muss also auf seinem Weg von der Steuerkartusche zur Auslaufrinne eine Vielzahl von Spalten passieren, bevor es in den ringförmigen zweiten Durchströmungsraum eintritt und dort axial nach oben in Richtung zur Auslaufrinne strömt.

Da Sanitärarmaturen häufig im Querschnitt eine kreisförmige Bauweise besitzen, ist eine Ausgestaltung der Erfindung besonders zweckmäßig, bei welcher die Segmente kreisbogenförmig sind und die mindestens eine geschlossene Kurve ein Kreis ist.

Die Ausnehmungen im Flansch des Bodenteiles können insbesondere Nuten oder Kerben sein, so dass Durchströmungsöffnungen entstehen, die radial nach außen durch die Mantelfläche des Aufnahmeraumes und radial nach innen durch den Flansch des Bodenteiles begrenzt sind.

Ein Ausführungsbeispiel der Erfindung wird nachfolgend anhand der Zeichnung näher erläutert; es zeigen
- Figur 1: einen Axialschnitt durch eine sanitäre Waschtischarmatur;
- Figur 2: die Vorderansicht der Waschtischarmatur von Figur 1;
- Figur 3: die Unteransicht eines Einsatzbodenteiles, das bei der Waschtischarmatur der Figuren 1 und 2 Verwendung findet;
- Figur 4: einen Axialschnitt durch das Einsatzbodenteil von Figur 3;
- Figur 5: in isometrischer Darstellung das Einsatzbodenteil der Figuren 3 und 4.

Die in der Zeichnung dargestellte und insgesamt mit dem Bezugszeichen 1 gekennzeichnete sanitäre Waschtischarmatur umfasst ein gegossenes Gehäuse 2, an das ein Auslauf 3 angeformt ist. Der Auslauf 3 enthält im Gegensatz zu herkömmlichen sanitären Armaturen keinen bis zu einer Auslauföffnung geschlossenen Wasserkanal sondern besitzt eine nach oben offene Auslaufrinne 4, also einen Auslaufbereich, der von oben her gesehen konkav gekrümmt ist.

In dem Gehäuse 2 ist ein nach oben offener, becherförmiger Aufnahmeraum 5 ausgespart, in welchem ein Aufnahmeeinsatz 6 für eine Steuerkartusche 7 angeordnet ist. Der Aufnahmeeinsatz 6 seinerseits umfasst ein Einsatzbodenteil 8 sowie ein Einsatzoberteil 9, die miteinander verschraubt sind.

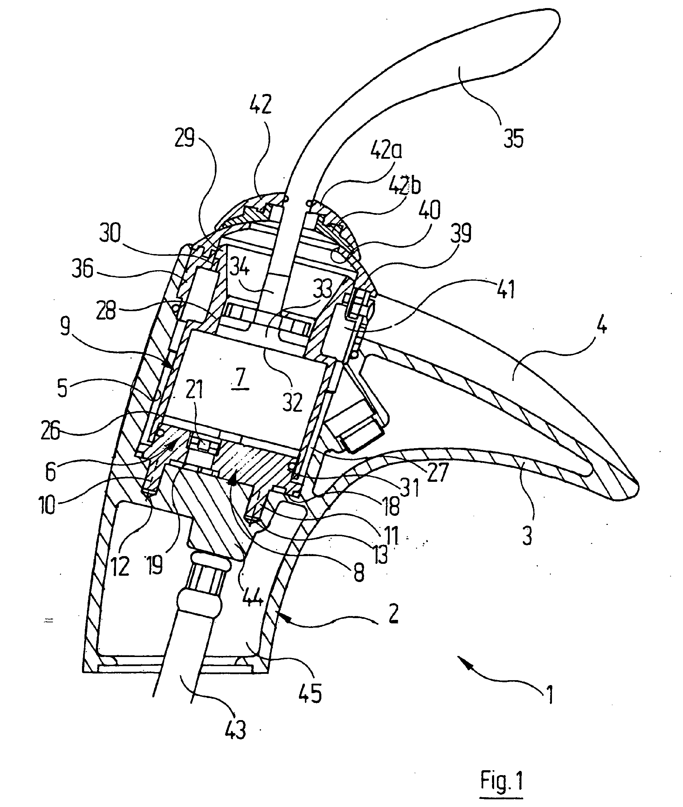

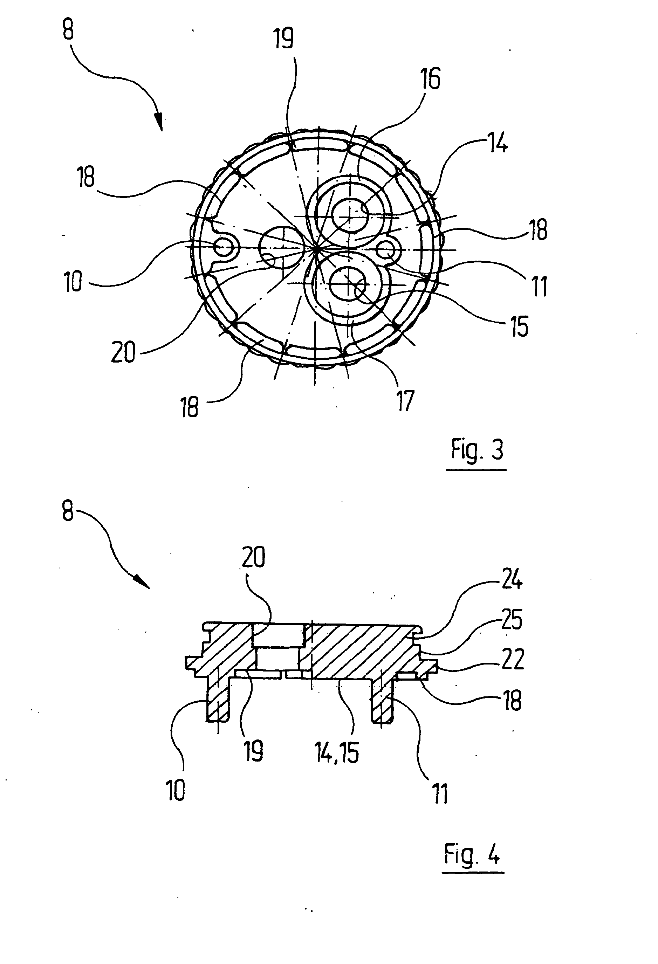

Das Einsatzbodenteil 8 ist in den Figuren 3 bis 5 näher dargestellt, auf welche nunmehr Bezug genommen wird. Es besitzt die Grundform einer zylindrischen Platte, an deren Unterseite einstückig zwei Positionierstifte 10, 11 angeformt sind. In montiertem Zustand ragen diese Positionierstifte 10, 11 in zwei Sackbohrungen 12, 13 hinein, die, wie aus Figur 1 ersichtlich, in die Bodenfläche des Aufnahmeraumes 5 eingebracht sind. Durch das Zusammenspiel der Positionierstifte 10, 11 und der Sackbohrungen 12, 13 wird dem Einsatzbodenteil 8 die richtige Position innerhalb des Aufnahmeraumes 5 gegeben.

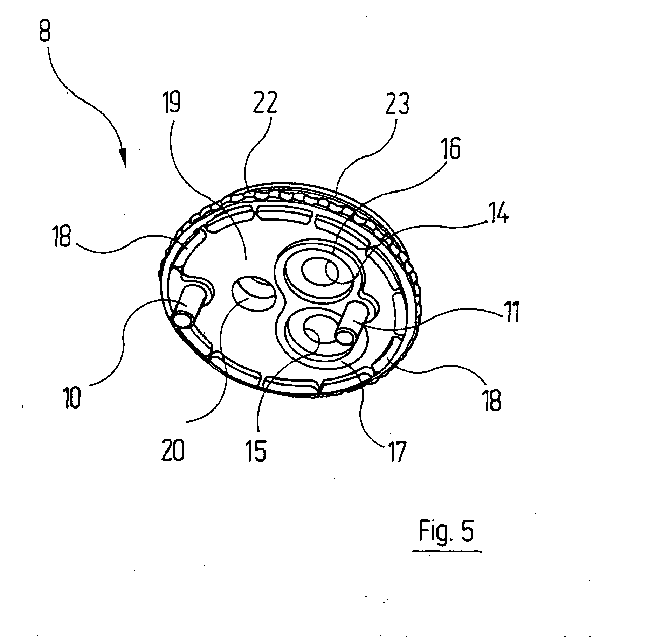

Durch das Einsatzbodenteil 8 verlaufen achsparallel zwei Durchgangsbohrungen 14, 15, die in den Figuren 1 und 4 nicht erkennbar sind, da die dortigen Schnitte in einer zwischen diesen beiden Durchgangsbohrungen 14, 15 liegenden Ebene liegen. Die Durchgangsbohrungen 14, 15 sind jedoch in den Figuren 3 und 5 sichtbar. Sie sind von kreisförmigen, nach Art einer "8" ineinander übergehenden Rippen 16, 17 umgeben, die sich erhaben von der Unterseite des Einsatzbodenteiles 8 nach unten erstrecken.

In der Nähe des radial äußeren Randes des Einsatzbodenteiles 8 verläuft auf einem Kreis eine Vielzahl von kreisbogenförmig gekrümmten Segmenten 18, zwischen denen jeweils ein schmaler Spalt 19 verbleibt und die ebenfalls erhaben von der Unterseite des Einsatzbodenteiles 8 nach unten verlaufen. Die unteren Stirnseiten der Rippen 16, 17 und der Segmente 18 liegen in einer gemeinsamen Ebene, in welcher das Einsatzbodenteil 8 auf dem Boden der Aufnahmeöffnung 5 des Gehäuses 2 aufliegt. Auf diese Weise entsteht zwischen dem Boden des Aufnahmeraumes 5 und der Unterseite des Einsatzbodenteiles 8 ein erster Durchströmungsraum 19, auf den weiter unten näher eingegangen wird.

Im Bereich des ersten Durchströmungsraumes 19, in der Symmetrieebene des Einsatzbodenteiles 8 liegend, durchstößt eine weitere Durchgangsbohrung 20 das Einsatzbodenteil 8. In einem oberen, im Durchmesser erweiterten Bereich der Durchgangsbohrung 20 befindet sich ein Strömungsbegrenzer 21, eine Mengendrossel bekannter Bauweise, die dafür sorgt, daß nur eine bestimmte Maximalmenge an Wasser pro Zeiteinheit durchströmen kann.

An das Einsatzbodenteil 8 ist ein radial überstehender Flansch 22 angeformt, dessen Außendurchmesser dem Innendurchmesser des Aufnahmeraumes 5 des Gehäuses 2 entspricht, derart, daß der Aufnahmeeinsatz 6 innerhalb des Aufnahmeraumes 5 zentriert wird. Wie insbesondere der isometrischen Darstellung der Figur 5 zu entnehmen ist, besitzt die äußere Mantelfläche des Flansches 22 eine Vielzahl halbzylindrischer Nuten oder Kerben 23, deren Funktion weiter unten deutlich wird.

Oberhalb des Flansches 22 weist das Einsatzbodenteil 8 einen zylindrischen, durch eine Ringnut 24 unterbrochenen Bereich auf, der ein Außengewinde 25 trägt. Die Ringnut 24 dient der Aufnahme einer O-Ringdichtung, welche das Einsatzoberteil 9 gegen das Einsatzbodenteil 8 abdichtet.

Das Einsatzoberteil 9 besitzt eine kreiszylindrische Schürze 26, deren Außendurchmesser etwas kleiner als der Innendurchmesser des Aufnahmeraumes 5 des Gehäuses 2 ist, so daß zwischen der Außenmantelfläche des Einsatzoberteiles 9 und der Innenmantelfläche der Aufnahmeöffnung 5 ein ringförmiger, zweiter Durchströmungsraum 27 entsteht. Das Einsatzoberteil 9 verjüngt sich oberhalb der Schürze 26 über eine radial nach innen springende Stufe zu einem im wesentlichen zylindrischen Kragen 28, der an seinem oberen Ende einen radial größeren Bereich 29 aufweist. In der Mantelfläche des radial vergrößerten Bereiches 30 des Kragens 28 ist einr Ringnut 30 zum Einlegen einer O-Ring-Dichtung eingeformt.

Am unteren Bereich der Schürze 26 des Einsatzoberteiles 9 befindet sich ein Innengewinde 31, welches mit dem Außengewinde 25 des Einsatzbodenteiles 8 zusammenwirkt.

In dem Innenraum des Aufnahmeeinsatzes 9 befindet sich, wie oben schon angedeutet, die Steuerkartusche 7, welche in bekannter Weise die den Wasserstrom steuernden Elemente, im allgemeinen Steuerscheiben aus Keramik, enthält. Die Steuerkartusche 7 weist an ihrer Bodenfläche insgesamt drei Öffnungen (nicht sichtbar) auf: Zwei dieser Öffnungen kommunizieren mit den Durchgangsöffnungen 14 und 15 im Einsatzbodenteil 9 und dienen der Zufuhr von Kalt- und Warmwasser zur Steuerkartusche 7. Die dritte Öffnung im Boden der Steuerkartusche 7 kommuniziert mit der Durchgangsöffnung 20; über sie strömt Mischwasser aus der Steuerkartusche 7 aus.

Die Steuerkartusche 7 besitzt eine Durchmesserstufe 32, die zu einem im Durchmesser verringerten Hals 33 der Steuerkartusche 7 überleitet und an welcher die Stufe des Einsatzoberteiles 9 zwischen Schürze 26 und Kragen 28 angreift. Die Anordnung ist offensichtlich so, daß durch Aufschrauben des Einsatzoberteiles 9 auf das Einsatzbodenteil 8 die Steuerkartusche 7 gegen die obere Stirnfläche des Einsatzbodenteiles 8 gedrückt wird.

Aus dem Hals 33 der Steuerkartusche 7 ragt in bekannter Weise ein Stellhebel 34, der zur Veränderung der Menge des auslaufenden Wassers um eine senkrecht zur Zeichenebene stehende Achse verschwenkt und zur Veränderung der Temperatur des auslaufenden Wassers um eine in der Zeichenebene liegende Achse verdreht werden kann. An dem Stellhebel 34 ist in hier nicht näher interessierender Weise lösbar ein Handgriff 35 befestigt, der nach oben aus dem Gehäuse 2 der Waschtischarmatur 1 herausgeführt ist und der Betägigung durch den Benutzer dient.

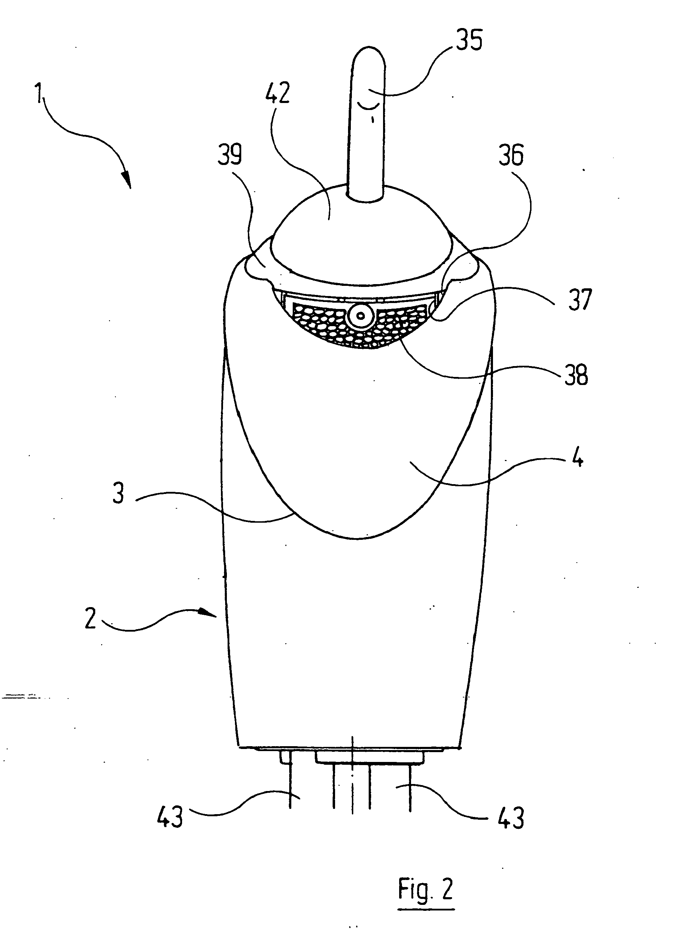

In den oberen Endbereich des Aufnahmeraumes 5 des Gehäuses 2 ist ein Ring 36 eingesetzt, der im der Auslaufrinne 4 zugewandten Bereich ein Fenster 37 besitzt, wie dies inbesondere der Figur 2 zu entnehmen ist. In das Fenster 37 des Ringes 36 ist ein Strahlregler 38 eingesetzt, der eine Vielzahl von in einer Wabenanordnung angeordneten Durchströmungsöffnungen aufweist. An der oberen Stirnseite des Ringes 36 ist, beispielsweise durch Verklipsen oder Verkleben, ein kugelkalottenförmiges Abschlußteil 39 befestigt, das eine mit der Achse des Aufnahmeraumes 5 koaxiale Durchgangsbohrung 40 besitzt. Durch die Durchgangsbohrung 40 erstreckt sich Bedienungsgriff 35.

Durch die Durchmesserabstufung des Einsatzteiles 9 entsteht zwischen dessen Kragen 28 und dem Ring 36 ein ringförmiger, verhältnismäßig voluminöser Tosraum 41, der nach unten mit dem ringförmigen Durchströmungsraum 27 und über dem Strahlregler 38 radial - bezogen auf die Achse des Aufnahmeraumes 5 - nach vorne mit der Auslaufrinne 4 kommuniziert. Der Tosraum 41 ist mehr als doppelt, im dargestellten Beispiel etwa dreimal, so breit wie der zweite ringförmige Durchströmungsraum 27 und befindet sich bezogen auf die Achse des Aufnahmeraumes 5 in einer solchen axialen Höhe, dass in axialer Richtung mindestens eine teilweise Überlappung mit dem inneren Ende der Auslaufrinne 4 gegeben ist.

An dem Bedienungsgriff 35 ist ein ebenfalls kugelkalottenförmiges Abdeckteil 42 befestigt, dessen Unterseite kugelabschnittartig gekrümmt ist. Der Krümmungsradius stimmt mit dem Krümmungsradius des Abschlußteiles 39 im wesentlichen überein. Das Abdeckteil 42 umfasst ein äußeres Sichtteil 42a sowie ein mit diesem Sichtteil 42a verklebtes oder verklipstes Gleitteil 42b. Das Sichtteil 42a besteht vorzugsweise aus Metall und ist mit einer Sichtoberfläche, beispielsweise einer Verchromung, versehen. Das Gleitteil 42b besteht aus einem gute Gleiteigenschaften aufweisenden Kuststoff; sein Durchmesser ist etwas geringer als derjeniger des Sichtteiles 42a. Während das Gleitteil 42b mit seiner konkaven Unterseite auf dem Abschlußteil 39 entlang gleitet, ist der untere, radial außerhalb des Gleitteiles 42b liegende Rand des Sichtteiles 42a etwas nach oben versetzt, so daß dieser Rand nicht an dem Abschlußteil 39 zu liegen kommt.

Das Gehäuse 2 der Sanitärarmatur besitzt im unteren Bereich einen weiteren, nach unten offenen Hohlraum, durch den sich zwei Wasserzufuhrleitungen 43 hindurch erstrecken. Von den beiden Wasserzufuhrleitungen 43 ist in Figur 1 nur eine erkennbar, die hinter der Schnittebene liegt. Die Wasserzufuhrleitungen 43 sind jeweils mit Anschlußstutzen 44 verbunden, die unten an die zwischen dem Aufnahmeraum 5 und dem unteren Hohlraum 45 liegende Wand des Gehäuses 2 angeformt sind. Zwei Durchgangsbohrungen, die durch diese Wand hindurchlaufen, verbinden die Wasserzulaufleitungen 43 mit den Durchgangsbohrungen 14, 15 im Einsatzbodenteil 8 und damit mit den Wasserzulauföffnungen im Boden der Steuerkartusche 7.

Die oben beschriebene Waschtischarmatur 1 funktioniert wie folgt:

Wird mit Hilfe des Handgriffs 35 die Steuerkartusche 7 geöffnet, so beginnt über zumindest eine der beiden Wasserzulaufleitungen 43 Wasser zu strömen. Dieses gelangt durch die entsprechende(n) der beiden Durchgangsbohrungen 14, 15 in das Innere der Steuerkartusche 7, wo je nach Drehstellung des Handgriffes 35 und damit des Stellschaftes 34 eine Vermischung von Kalt- und Warmwasser stattfindet. Das Mischwasser tritt an der Unterseite der Steuerkartusche 7 wieder aus und durchströmt nunmehr die Mengendrossel 21 in der Durchgangsbohrung 20 des Einsatzbodenteiles 8, von wo aus es in den Durchströmungsraum 19 an der Unterseite des Einsatzbodenteiles 8 gelangt.

Das Mischwasser fließt nun nunmehr im wesentlichen radial zum Außenrand des Einsatzbodenteiles 8, wobei es die Spalte 19 zwischen den einzelnen Segmenten 18 passiert. Hierdurch findet eine erste Vergleichmäßigung des Wasserstromes statt. Das Wasser verändert nunmehr seine Strömungsrichtung. Es strömt axial nach oben durch die Nuten 23 an der Mantelfläche des Flansches 22 des Einsatzbodenteiles 8, was eine weitere Vergleichmäßigung des Wasserstromes zur Folge hat, und gelangt nunmehr in den ringförmigen Durchströmungsraum 27, in dem es entlang der Außenmantelfläche des Einsatzoberteiles 9 nach oben in den ringförmigen Tosraum 41 strömt.

In diesem Tosraum 41 findet erneut ein Wechsel der Strömungsrichtung statt, diesmal von axial nach oben in radial nach vorne. Das in den Tosraum 41 eintretende Wasser umströmt hierzu auf gegenüberliegenden Seiten den Kragen 28 des Einsatzoberteils 9 auf die Auslaufrinne 4 zu. Dabei kann sich das Wasser beruhigen, bevor es dann, zum dritten Mal vergleichmäßigt, durch den Strahlregler 38 nach außen in die Auslaufrinne 4 strömt. Dort fließt es dann nahezu laminar und drucklos nach unten ab und fällt nach Art eines Wasservorhanges über den unteren Rand des Wasserauslaufes frei nach unten in den Waschtisch.

## Patentansprüche

1. Sanitäre Auslaufarmatur, insbesondere Einhebelmischer, mit
a) einem Gehäuse (2);
b) einem Auslauf (3), der eine nach oben offene Auslaufrinne (4) aufweist, durch welche im Betrieb Wasser drucklos strömt;
c) einem Aufnahmeraum (5) in dem Gehäuse (2), in welchem ein eine Steuerkartusche (7) enthaltender Aufnahmeeinsatz (6) angeordnet ist;
wobei
d) zwischen einem Bodenteil (8) des Aufnahmeeinsatzes (6) und dem Boden des Aufnahmeraums (5) ein erster Durchströmungsraum (19) vorgesehen ist, durch welchen Wasser, welches die Steuerkartusche (7) verlässt, radial nach außen strömen kann;
e) zwischen der Mantelfläche des Aufnahmeeinsatzes (6) und der Mantelfläche des Aufnahmeraums (5) ein ringsförmiger, zweiter Durchströmungsraum (27) ausgebildet ist, der unten mit dem ersten Durchströmungsraum (19) und oben mit der Auslaufrinne (4) kommuniziert;
**dadurch gekennzeichnet, dass**
f) an der Unterseite des Bodenteils (8) des Aufnahmeeinsatzes (6) eine Mehrzahl von die Wasserströmung vergleichmäßigenden Vorsprünge (18) vorgesehen ist, die in den ersten Durchströmungsraum (19) ragen;
g) an das Bodenteil (8) des Aufnahmeeinsatzes (6) ein radial überstehender Flansch (22) angeformt ist, der die Mantelfläche des Aufnahmeraums (5) berührt und den Aufnahmeeinsatz (6) zentriert, wobei der Flansch (22) eine Mehrzahl von die Wasserströmung beruhigenden Ausnehmungen (23) aufweist.

2. Sanitäre Auslaufarmatur nach Anspruch 1, **dadurch gekennzeichnet, dass** die Vorsprünge (18) mit ihrer unteren Stirnseite auf dem Boden des Aufnahmeraums (5) aufstehen.

3. Sanitäre Auslaufarmatur nach Anspruch 1 oder 2, **dadurch gekennzeichnet, dass** die Vorsprünge (18) als Segmente ausgestaltet sind, zwischen denen jeweils ein von Wasser durchströmbarer Spalt (19) verbleibt und die auf mindestens einer geschlossenen Kurve liegen.

4. Sanitäre Auslaufarmatur nach Anspruch 3, **dadurch gekennzeichnet, dass** die Segmente (18) kreisbogenförmig sind und die mindestens eine geschlossene Kurve ein Kreis ist.

5. Sanitäre Auslaufarmatur nach einem der vorhergehenden Ansprüche, **dadurch gekennzeichnet, dass** die Ausnehmungen (23) Nuten oder Kerben sind.

## Claims

1. A sanitary outlet fitting, in particular a single lever mixer, having
a) a housing (2);
b) an outlet (3), which comprises an upwardly open outlet channel (4), through which, when in operation, water flows in an unpressurised manner;
c) a receiving space (5) in the housing (2), in which a receiving insert (6) containing a control cartridge (7) is arranged;
d) a first through-flow space (19) being provided between a base part (8) of the receiving insert (6) and the bottom of the receiving space (5), through which through-flow space water leaving the control cartridge (7) may flow radially outwards;
e) an annular, second through-flow space (27) being formed between the circumferential surface of the receiving insert (6) and the circumferential surface of the receiving space (5), which second through-flow space communicates at the bottom with the first through-flow space (19) and at the top with the outlet channel (4);
**characterised in that**
f) a plurality of water flow-smoothing projections (18) are provided at the underside of the base part (8) of the receiving insert (6), said projections protruding into the first through-flow space (19);
g) a radially projecting flange (22) is formed onto the base part (8) of the receiving insert (6), which flange contacts the circumferential surface of the receiving space (5) and centres the receiving insert (6), the flange (22) comprising a plurality of water flow-calming recesses (23).

2. A sanitary outlet fitting according to claim 1, **characterised in that** the projections (18) stand with their lower end faces on the bottom of the receiving space (5).

3. A sanitary outlet fitting according to claim 1 or claim 2, **characterised in that** the projections (18) take the form of segments, between each of which there remains a gap (19) through which water may flow and which are located on at least one closed curve.

4. A sanitary outlet fitting according to claim 3, **characterised in that** the segments (18) take the form of arcs of a circle and the at least one closed curve is a circle.

5. A sanitary outlet fitting according to any one of the preceding claims, **characterised in that** the recesses (23) are grooves or notches.

## Revendications

1. Robinetterie de sortie sanitaire, en particulier mitigeur à levier unique, avec
a) un boîtier (2) ;
b) une sortie (3), qui présente un conduit de sortie (4) ouvert vers le haut par lequel de l'eau s'écoule sans pression en fonctionnement ;
c) un espace récepteur (5) dans le boîtier (2), espace dans lequel est disposé un insert récepteur (6) contenant une cartouche de commande (7) ;
sachant
d) qu'un premier passage d'écoulement (19) est prévu entre une partie de fond (8) de l'insert récepteur (6) et le fond de l'espace récepteur (5), passage par lequel l'eau qui quitte la cartouche de commande (7) peut s'écouler radialement vers l'extérieur ;
e) un deuxième passage d'écoulement (27), annulaire, est formé entre la surface d'enveloppe de l'insert récepteur (6) et la surface d'enveloppe de l'espace récepteur (5), passage qui communique en bas avec le premier passage d'écoulement (19) et en haut avec le conduit de sortie (4) ;
**caractérisée en ce que**
f) une pluralité de saillies (18) uniformisant l'écoulement d'eau, qui dépassent dans le premier passage d'écoulement (19), sont prévues sur le dessous de la partie de fond (8) de l'insert récepteur (6) ;
g) un collet (22) dépassant radialement est formé sur la partie de fond (8) de l'insert récepteur (6), collet qui est en contact avec la surface d'enveloppe de l'espace récepteur (5) et qui centre l'insert récepteur (6), sachant que le collet (22) présente une pluralité d'évidements (23) stabilisant l'écoulement d'eau.

2. Robinetterie de sortie sanitaire selon la revendication 1, **caractérisée en ce que** les saillies (18) se dressent par leur face frontale inférieure sur le fond de l'espace récepteur (5).

3. Robinetterie de sortie sanitaire selon la revendication 1 ou 2, **caractérisée en ce que** les saillies (18) sont réalisées sous forme de segments, entre lesquels reste chaque fois libre un passage (19) par lequel peut s'écouler l'eau et qui se situent sur au moins une courbe fermée.

4. Robinetterie de sortie sanitaire selon la revendication 3, **caractérisée en ce que** les segments (18) sont en forme d'arcs de cercle et la courbe fermée au moins unique est un cercle.

5. Robinetterie de sortie sanitaire selon l'une des revendications précédentes, **caractérisée en ce que** les évidements (23) sont des rainures ou des entailles.
